(19) Europäisches Patentamt
European Patent Office
Office européen des brevets

(11) Veröffentlichungsnummer: **0 170 865**
**B1**

(12) **EUROPÄISCHE PATENTSCHRIFT**

(45) Veröffentlichungstag der Patentschrift: **26.07.89**

(51) Int. Cl.[4]: **C 08 G 18/10**, C 08 G 18/28, C 08 G 18/38, C 09 K 3/10, C 08 J 3/16, C 09 D 3/72

(21) Anmeldenummer: **85108007.7**

(22) Anmeldetag: **28.06.85**

(54) **Verfahren zur Herstellung von unter Feuchtigkeitsausschluss lagerstabilen Kunstharzmassen und deren Verwendung.**

(30) Priorität: **21.07.84 DE 3426987**

(43) Veröffentlichungstag der Anmeldung: **12.02.86 Patentblatt 86/7**

(45) Bekanntmachung des Hinweises auf die Patenterteilung: **26.07.89 Patentblatt 89/30**

(84) Benannte Vertragsstaaten: **AT BE CH DE FR GB IT LI LU NL SE**

(56) Entgegenhaltungen:
**EP-A- 0 096 249**
**US-A- 3 632 557**

**Die Akte enthält technische Angaben, die nach dem Eingang der Anmeldung eingereicht wurden und die nicht in dieser Patentschrift enthalten sind.**

(73) Patentinhaber: **SCHERING AKTIENGESELLSCHAFT Berlin und Bergkamen, Waldstrasse 14 Postfach 15 40, D-4709 Bergkamen (DE)**

(72) Erfinder: **Brinkmann, Bernd, Dr. Dipl.-Chem., Am Gorbach 14, D-4717 Nordkirchen (DE)**
Erfinder: **Lucas, Herman-Josef, Schlaunstrasse 20, D-4715 Ascheberg-Herbern (DE)**

**EP 0 170 865 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Elastische Kunstharzmassen wie z.B. Klebe- und Dichtungsmassen für saugende und nichtsaugende Untergründe bzw. Oberflächen haben in den letzten Jahren insbesondere im Bauwesen zunehmend an Bedeutung erlangt. Während in früheren Jahren überwiegend Thiokol-Dichtungsmassen eingesetzt wurden, finden in jüngerer Zeit mehr Silikon- und Polyurethandichtungsmassen Verwendung.

Elastische Beschichtungs-, Dichtungs- und Klebemassen werden als Fugendichtungsmassen zur Abdichtung von Fertigbau-Elementen und Sichtbeton-Flächen eingesetzt und müssen neben der eigentlichen Abdichtungsfunktion die erheblichen temperaturabhängigen Bewegungen ausgleichen. Dabei treten Zug-Dehnungskräfte auf, welche die Adhäsionsfläche erheblich belasten können. Weiterhin finden sie Verwendung als Klebe- und Dichtungsmassen in der Automobilindustrie, wo sie besonders vorteilhaft zum Abdichten von Glas gegen Metall, wie beispielsweise zur Befestigung von Windschutzscheiben, und für andere Anwendungszwecke, bei denen Metall auf Metall verklebt werden muss, eingesetzt werden.

Bei diesen Anwendungen werden hohe Anforderungen sowohl an das Adhäsionsvermögen als auch an die Aushärtungsgeschwindigkeit gestellt.

Aus der DE-OS 2 738 979 ist ein Verfahren zur Herstellung von vernetzbaren Polyurethanpräpolymeren mit endständigen Alkoxysilylgruppen bekannt. Unter Einwirkung von Feuchtigkeit härten diese Präpolymeren bei Raumtemperatur zu elastischen Produkten mit guten mechanischen Eigenschaften guter Haftung aus.

Diese Produkte weisen jedoch den Nachteil auf, dass ihre Aushärtungsgeschwindigkeit, insbesondere in den in der Praxis überwiegend vorkommenden Schichtdicken von $\geq 1$ mm, noch nicht den Anforderungen entspricht.

Infolge der langsamen Hautbildung bleiben die Oberflächen lange klebrig, so dass sich Staub- und Schmutzteilchen auf ihnen ablagern können, wodurch sowohl ihre mechanischen Eigenschaften als auch das äussere Erscheinungsbild beeinträchtigt werden. Darüberhinaus ist die oft erforderliche Belastbarkeit der Beschichtung, Abdichtung oder Verklebung nicht in praxisgerechten Zeiten gegeben.

Aufgabe der vorliegenden Erfindung war es daher, diese Nachteile des Standes der Technik zu überwinden und in Gegenwart von Luftfeuchtigkeit aushärtende Kunstharzmassen zu entwickeln, welche neben guter Haftung und guten mechanischen Eigenschaften eine vergrösserte Aushärtungsgeschwindigkeit aufweisen.

Diese Aufgabe wurde dadurch gelöst, dass als Kunstharzmassen Umsetzungsprodukte aus bestimmten Isocyanatpräpolymeren und Amino- bzw. Merkaptosilanen verwendet werden.

Gegenstand der vorliegenden Erfindung ist ein Verfahren zur Herstellung von unter Feuchtigkeitsausschluss lagerstabilen Kunstharzmassen auf Basis von NCO-Gruppen enthaltenden Präpolymeren und Alkoxysilanen, welches dadurch gekennzeichnet ist, dass man NCO-Gruppen enthaltende Polyetherurethane, welche Umsetzungsprodukte sind von Polyetherpolyolen mit überschüssigen Isocyanaten mit Molgewichten im Bereich von 1000 - 30000 und welche mindestens zwei Isocyanatgruppen pro Molekül enthalten, mit mindestens einer Alkoxysilanverbindung der allgemeinen Formel

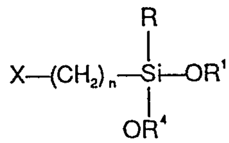

I

mit X = $-SH$, $-NHR^2$

R = $-CH_3$, $-C_2H_5$, $-OR^1$; bevorzugt $-OR^1$

$R^1$ = $-CH_2-CH_2-O-_mR^3$

$R^2$ = H oder $-C_2H_4-NH_2$ oder ein gegebenenfalls substituierter aliphatischer und/oder cycloaliphatischer oder aromatischer Kohlenwasserstoffrest mit 1 - 10 C-Atomen; insbesondere H, $-CH_3$ oder $-C_2H_5$

$R^3$ = gegebenenfalls substituierter Alkyl- oder Arylrest mit 1 - 10 C-Atomen; insbesondere ein Methyl-, Ethyl- oder Phenylrest

$R^4$ = Alkylrest mit 1-4 C-Atomen oder bevorzugt $R^1$

n = 1-6, vorzugsweise 2 oder 3

m = 1-30, vorzugsweise 1-15, insbesondere 1-3

umsetzt, wobei das Verhältnis zwischen den reaktiven X- und NCO-Gruppen im Bereich von 1:2 bis 1:1 liegt und gegebenenfalls übliche Kettenverlängerer, Kettenabbrecher übliche inerte Zusatzstoffe, Hilfsstoffe und Beschleuniger zusetzt.

Die erfindungsgemäss zu verwendenden Silanverbindungen können durch Umesterungsreaktionen, wie sie z.B. in der DE-A 1 545 080 beschrieben sind, aus den entsprechenden Alkoxysilanen erhalten werden.

Das Verhältnis zwischen den erfindungsgemäss zu verwendenden Silanen und den präpolymeren Isocyanaten kann, bezogen auf reaktive X- und NCO- Gruppen, im Bereich von 1:2 bis 1:1 variiert werden. Die Wahl der Mengenverhältnisse richtet sich nach dem Molekulargewicht des präpolymeren Isocyanats und/oder nach der Anzahl der funktionellen Gruppen im Silan, dem gewünschten Vernetzungsgrad des Endproduktes sowie dessen mechanischen Eigenschaften.

Wenn die Umsetzungsprodukte aus dem Polyetherurethan und dem Alkoxysilan (im folgenden «präpolymere-Silane» genannt) noch freie NCO-Gruppen aufweisen, können diese mit monofunktionellen Aminen, Merkaptanen oder Alkohlen umgesetzt werden. Vorzugsweise werden flüssige Alkohole mit 4-18, insbesondere 10-18, C-Atomen verwendet. Besonders bevorzugt sind Butylamin, Decylamin, Dodecylamin, Stearylamin, Butanol, Hexanol, Dekanol, Dodekanol, Stearylalkohol, Nonylphenyl oder deren Mischungen.

Falls gewünscht, kann eine Kettenverlängerung der präpolymeren Silane durch Umsetzung der freien NCO-Gruppe mit di- oder polyfunktionellen Alkoholen, Merkaptanen und Aminen durchgeführt werden. Bevorzugte Kettenverlängerungsmittel sind Butandiol, Hexandiol, Diäthylenglykol, Trimethylhexandiole, Hexamethylendiamin, Trimethylhexamethylendiamin oder deren Mischungen.

Durch Auswahl von geeigneten Silan/NCO-Verhältnissen, Molgewichten der NCO-Gruppen enthaltenden Polyetherurethane, Kettenabbrechern bzw. Kettenverlängerungsmitteln kann der Vernetzungsgrad des gehärteten Endproduktes in gewünschter Weise gesteuert werden.

Die präpolymeren Silane können noch freie NCO-Gruppen enthalten z. B. bis 0,7 Gew.%. Erfindungsgemäss werden jedoch Produkte bevorzugt, in denen IR-spektroskopisch kein freies Isocyanat mehr nachweisbar ist.

Bei den erfindungsgemäss zu verwendenden Polyetherurethanen handelt es sich um Umsetzungsprodukte von Polyetherpolyolen mit überschüssigen Isocyanaten mit Molgewichten im Bereich von 10000–30000, vorzugsweise von 2000–25000.

Als Polyole finden üblicherweise Polyätherpolyole Verwendung, die durch anionische Polymerisation, Copolymerisation und Blockcopolymerisation von Alkylenoxiden, wie Äthylenoxid, Propylenoxid und Butylenoxid, mit bis- oder polyfunktionellen Alkoholen, wie Butandiol-(1,4), 1,1,1-Trimethyloläthan, 1,1,1-Trimethylolpropan, Hexantriol-(1,2,6), Glycerin, Pentaerythrit und Sorbit, oder mit Aminen, wie Methylamin, Äthylendiamin und 1,6-Hexamethylendiamin, als Startkomponenten oder durch kationische Polymerisation und Copolymerisation cyclischer Äther, wie Tetrahydrofuran, Äthylenoxid und Propylenoxid, mit sauren Katalysatoren, wie Bortrifluoridätherat und durch Polykondensation von unter Wasserabspaltung polykondensierbaren Glykolen, wie Hexandiol-(1,6) in Gegenwart saurer Verätherungskatalysatoren, wie p-Toluolsulfonsäure, erhalten werden, sowie, z. B. im Hinblick auf eine Flammschutzwirkung, Oxalkylierungsprodukte der Phosphorsäure und phosphoriger Säuren, z. B. mit Äthylenoxid, Propylenoxid, Butylenoxid und Styroloxid. Als Polythioätherpolyetherpolyole kommen vorzugsweise die Polykondensationsprodukte des Thiodiglykols mit sich und mit Diolen und/oder Polyolen, wie z. B. Hexandiol-(1,6), Triäthylenglykol, 2,2-Dimethylpropandiol-(1,3) und 1,1,1-Trimethylolpropan, in Gegenwart saurer Verätherungskatalysatoren, wie Phosphorsäure und phosphorige Säure, in Betracht. Als Polyacetale seien vorzugsweise die Polykondensationsprodukte aus Formaldehyd und Diolen und/oder Polyolen, wie Diäthylenglykol, Triäthylenglykol, Butandiol-(1,4), Hexandiol-(1,6), Thioglykol und 1,1,1-Trimethylolpropan, mit sauren Katalysatoren, wie Phosphorsäure und p-Toluolsulfonsäure, genannt.

Die Polyetherpolyole weisen Molgewichte von ca. 300–20000 auf. Erfindungsgemäss bevorzugt werden Polypropylenglykole mit Molgewichten von ca. 500–6000.

Die genannten Hydroxylgruppen enthaltenden Polymerisations- und Polykondensationsprodukte werden in bekannter Weise mit Di- und /oder Polyisocyanaten (vorzugsweise aliphatischen, cycloaliphatischen, cycloaliphatisch-aliphatischen oder aromatischen Diisocyanaten) in Isocyanatgruppen enthaltende sogenannte Isocyanatpräpolymere übergeführt. Nimmt man eine bestimmte zusätzliche Kettenverlängerungsreaktion über Urethangruppen in Kauf oder ist diese sogar erwünscht, so setzt man die hydroxylgruppenhaltigen Polymerisations- oder Polykondensationsprodukte in einem NCO/OH-Verhältnis von ca. 1,1 bis 2,5 : 1 mit den Di- oder Polyisocyanaten um. Ist eine Kettenverlängerungsreaktion nicht erwünscht, so verwendet man einen wesentlich grösseren Überschuss an Di- bzw. Polyisocyanat, vorzugsweise einem NCO/OH-Verhältnis von 3 bis 5 entsprechend, verfährt im übrigen in derselben Weise wie bei den niedrigen NCO/OH-Verhältnissen und entfernt schliesslich das überschüssige Di- bzw. Polyisocyanat, z. B. im Falle destillierbarer Di- bzw. Polyisocyanate durch Dünnschichtdestillation oder, bei nicht destillierbaren Isocyanaten, durch Lösungsmittelextraktion.

Als geeignete Di- oder Polyisocyanate seien z. B. genannt: Toluylendiisocyanat-(2,4) sowie dessen technische Gemische mit Toluylendiisocyanat-(2,6), Toluylendiisocyanat-(2,6), Diphenylmethandiisocyanat-(4,4'), 1,6-Hexamethylendiisocyanat, Dimerfettsäurediisocyanat, Naphthylendiisocyanat-(1,5), m-Xylylendiisocyanat, 1-Methyl-2,4-diisocyanato-cyclohexan, Isophorondiisocyanat, 2,4,4-Trimethyl-1,6-diisocyanatohexan, dimeres Toluylendiisocyanat-(2,4), N,N'-Di-(4-methyl-3-isocyanatophenyl)-harnstoff, N,N'-N''-Tri-(6-isocyanato-hexyl)-biuret, Triphenylmethantriisocyanat-(4,4',4''), das Umsetzungsprodukt aus 3 Mol Toluylendiisocyanat-(2,4) und 1 Mol 1,1,1-Trimethylolpropan, Tri- und Polymerisationsprodukte von Toluylendiisocyanat-(2,4), Mischtrimerisations- und Mischpolymerisationsprodukte von Toluylendiisocyanat-(2,4) und 1,6-Hexamethylendiisocyanat, Gemische isomerer Diphenylmethandiisocyanate, mehr als zwei jeweils über Methangruppen verknüpfte Benzolkerne enthaltene Polyisocyanate und Diisocyanate mit Diphenylmethanstruktur, deren Isocyanatgruppen teilweise in Carbodiimidgruppen überführt sind.

Die Herstellung der Isocyanatgruppen aufweisenden Polymerisations- und Polykondensationsprodukte kann in Substanz oder in gegenüber Isocyanaten inerten Lösungsmitteln durchgeführt werden. Nach beendeter Umsetzung werden gegebenenfalls verwendete Lösungsmittel durch Destillation, vorzugsweise durch Dünnschichtdestillation, entfernt. Es ist jedoch gegebenenfalls vorteilhaft, direkt die Lösungen der Isocyanatprepolymeren weiter zu verwenden.

Als Katalysatoren, die in Mengen von 0,001 bis 2% verwendet werden können, kommen z. B. Diazabicyclooctan, Dibutylzinndilaurat und Zinn(II)-octoat in Frage.

Geeignete Lösungsmittel sind z.B. Ester, wie Äthylacetat, Butylacetat, Methyläthylketon, Methylisobutylketon, Aromaten wie Toluol, Xylol und höhere Aromatengemische sowie Gemische der genannten Lösungsmittel.

Die nach bekannten Verfahren aus den genannten Komponenten hergestellten Isocyanatgruppen aufweisenden Polymerisations- oder Polykondensationsprodukte können anschliessend in bekannter Reaktion mit den reaktiven Gruppen der Silane umgesetzt werden.

Zur Herstellung der Beschichtungs-, Dichtungs- und Klebemassen können weiterhin auf diesem Gebiet übliche inerte Füllstoffe, Pigmente, Farbstoffe, Weichmacher, Verdickungsmittel, Antioxidantien, Haftvermittler, Thixotropierungsmittel, Lösungsmittel und Streckmittel wie mit Isocyanat nicht reaktive Teere, Teerpeche, Asphalte oder Kunststoffe wie Polyolefine, Vinylkunststoffe, Polyamide mitverwendet werden. Als Füllstoffe werden Sande, Gesteinsmehl, Calciumcarbonat und insbesondere Kieselsäuren und als Lösungsmittel gegebenenfalls substituierte Kohlenwasserstoffe oder Ketone bevorzugt.

Zur Beschleunigung der Härtung können organische oder anorganische Verbindungen wie z.B. Dibutylzinndiacetat, Tetrabutyldioleatodistannoxan in geringen Mengen als Katalysatoren zugegeben werden.

Die erfindungsgemässen Kunstharzmassen werden vorzugsweise als elastische Beschichtungs-, Klebe- und Dichtungsmassen für saugende und nichtsaugende Untergründe bzw. Oberflächen insbesondere auf dem Bau- und Automobilsektor eingesetzt.

A Herstellung der erfindungsgemäss mitverwendeten Silanverbindungen

Beispiel 1

Umesterung von γ-Aminopropyltrimethoxysilan mit Diäthylenglykolmonomethyläther.

In einer Standapparatur, die mit Innenthermometer, Rückflusskühler mit Calciumchlorid-Rohr und Rührer versehen ist, wurden 412 g (2,3 Mol) γ-Aminopropyltrimethoxysilan vorgelegt und 1242 g (10,35 Mol = 50% Überschuss) Diäthylenglykolmonomethyläther zugemischt. Der Reaktionsansatz wurde zwei Stunden am Rückfluss erhitzt, wobei die Siedetemperatur bei etwa 110 °C lag.

Nach dem Abkühlen des Reaktionsansatzes wurde der Rückflusskühler durch eine Destillationsbrücke ersetzt. Zunächst wurde bei Normaldruck der bei der Reaktion freigesetzte Methylalkohol und anschliessend, nach erneutem Abkühlen, im Vakuum von etwa 10 mbar nicht umgesetzter Diäthylenglykolmonomethyläther bis zu einer Innentemperatur von 130 °C abdestilliert.

Es wurden 979 g eines Rohproduktes erhalten, das noch etwa 13 Gew.-% Diäthylenglykolmonomethyläther enthielt. Das Umesterungsprodukt besteht zu etwa 75% aus dem Tris-2-(2-Methoxy-äthoxy-)äthoxy-silyl-3-aminopropan der Formel $H_2N\text{-}CH_2\text{-}CH_2\text{-}CH_2\text{-}Si\text{-}(O(\text{-}CH_2\text{-}CH_2\text{-}O)_2\text{-}CH_3)_3$, die durch Gaschromatographie und Massenspektrometrie bestätigt wurde. Daneben wurden überwiegend die korrespondierenden Mono- und Di-(2-(2-methoxy-äthoxy))-silyl-Verbindungen erhalten

Gemäss Beispiel A 1 wurden die folgenden Silanverbindungen hergestellt:

| Beispiel | Formel |
|---|---|
| 2 | $CH_3—NH—(CH_2)_3—Si[O—(CH_2—CH_2—O)_2CH_3]_3$ |
| 3 | $HS—(CH_2)_3—Si[O—(CH_2—CH_2—O)_2—CH_3]_3$ |
| 4 | $H_2N—(CH_2)_3—Si[O—(CH_2—CH_2—O)_2—C_2H_5]_3$ |
| 5 | $H_2N—(CH_2)_3—Si(CH_3)[O—(CH_2—CH_2—O)_2—CH_3]_2$ |
| 6 | $HS—(CH_2)_3—Si[O—CH_2—CH_2—O—C_2H_5]_3$ |
| 7 | $H_2N—(CH_2)_3—Si[O—(CH_2—CH_2—O)_3—C_2H_5]_3$ |
| 8* | $H_2N—(CH_2)_3—Si[O—(CH_2—CH_2—O)_{9\text{-}30}CH_3]_3$ |

| Beispiel | Formel |
|---|---|
| 9* | $H_2N-(CH_2)_3-Si\left[O-(CH_2-CH_2-O)_{10\text{-}15}C_2H_5\right]_3$ |
| 10 | $H_2N-CH_2-CH_2-Si\left[O-(CH_2-CH_2-O)_2-CH_3\right]_3$ |
| 11 | $H_2N-(CH_2)_3Si(CH_2H_5)-\left[-O(CH_2-CH_2-O)_2-CH_3\right]_2$ |
| 12 | $H_2N-CH_2-CH_2-Si(CH_3)\left[O-(CH_2-CH_2-O)_2-CH_3\right]_2$ |
| 13 | $H_2N-(CH_2)_3-Si(O-C_2H_5)\left[O(CH_2CH_2O)_2-CH_3\right]_2$ |
| 14 | $H_2N-(CH_2)_6-Si\left[O-(CH_2-CH_2-O)_2-CH_3\right]_3$ |
| 15 | $C_2H_5HN-(CH_2)_3-Si\left[O(CH_2-CH_2-O)_2-CH_3\right]_3$ |
| 16 | 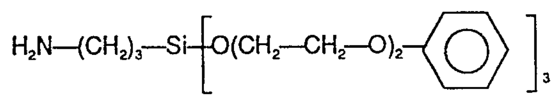 |
| 17 | $H_2N-(CH_2)_2-NH-(CH_2)_3-Si\left[O-(CH_2-CH_2-O)_2-CH_3\right]_3$ |

*) Aus technischen Mischungen eines Methylpclyglycols bzw. Äthylpolyglycols

B Herstellung der präpolymeren Isocyanate

Beispiel 1

1000 g eines linearen Polypropylenglykols der OH-Zahl 56,1 werden mit
222,3 g Isophorondiisocyanat versetzt. Nach Zugabe von
1,2 g Dibutylzinndilaurat wird die Mischung unter kräftigem Rühren auf 75 °C erwärmt und für 2,5 Stunden bei dieser Temperatur gehalten. Das Reaktionsprodukt hat einen Isocyanatgehalt von 3,4%.

Gemäss Beispiel B 1 wurden die folgenden präpolymeren Isocyanate hergestellt:

| Beispiel | Polyol | Isocyanat | Verhältnis OH/NCO | NCO-Gehalt[1] % |
|---|---|---|---|---|
| 2 | Polypropylenglykol OH/Z 56,1 | Isophorondiisocyanat (IPDI) | 1/1,8 | 2,82 |
| 3* | Polypropylenglykol OH/Z 56,1 | IPDI | 1/1,305 | 1,12 |
| 4* | Polypropylenglykol OH/Z 56,1 | Toluylendiisocyanat (TDI) | 1/1,195 | 0,75 |
| 5* | Polypropylenglykol OH/Z 56,1 | IPDI | 1/1,099 | 0,375 |
| 6* | Polypropylenglykol OH/Z 112 | Trimethylhexamethylen-diisocyanat (TMDI) | 1/1,159<br>1/1,159 | 1,08<br>1,08 |

| Beispiel | Polyol | Isocyanat | Verhältnis OH/NCO | NCO-Gehalt[1] % |
|---|---|---|---|---|
| 7 | verzweigtes Polypropylenglykol OH/Z 35,6 | IPDI | 1/2 | 2,25 |
| 8* | Polytetrahydrofuran OH/Z 55,5 | IPDI | 1/2 | 3,07 |
| 9 | lineares Polyglykol mit Propylenoxid und Äthylenoxid OH/Z 55 | IPDI | 1/2 | 3,38 |

[1] berechnet auf Feststoff
* 70%ige Lösung in Xylol

C Herstellung der präpolymeren Silane

Beispiel 1

I Zu
1000 g des unter B1 hergestellten präpolymeren Isocyanats werden
153,5 g des Silans A 1 zugetropft, wobei die Temperatur zwischen 55–80 °C gehalten wird. Der NCO-Gehalt des Reaktionsproduktes beträgt 1,7%.

II Zu
1000 g des obigen Reaktionsproduktes werden
43,6 g eines Polyoxipropylendiamins mit einem Molgewicht von 400 und einer Aminzahl von 280,5 (Jeffamin® D 400, Warenzeichen der Fa. Jefferson Chemical, Houston, USA) als Kettenverlängerer zugetropft bei einer Reaktionstemperatur von 55–80 °C. Der NCO-Gehalt des Produktes beträgt danach 0,75%.

III Zu
1000 g des Reaktionsprodukts II werden
34,7 g Dodekanol OH/Z 288 und 0,1% DBTL gegeben und die Mischung auf 75–80 °C erwärmt. Die Reaktion wird solange fortgeführt, bis im IR-Spektrum kein freies NCO mehr nachzuweisen ist.

Gemäss Beispiel C 1 wurden die folgenden präpolymeren Silane hergestellt, wobei die Stufen II und III auch einzeln oder zusammen entfallen können und wobei ein Austausch von Komponenten eine der aufgeführten Änderungen der Reaktionsbedingungen beinhalten kann.

Bei Einsatz von Merkaptosilan in I muss die Reaktionsmischung aus Merkaptoverbindung und Isocyanat unter Mitverwendung von 0,1% DBTL, bezogen auf Reaktionsmischung, auf 75–80 °C erwärmt werden.

Werden als Kettenverlängerungsmittel in II anstelle der Amine Merkaptoverbindungen oder Alkohole verwendet, muss die Reaktionsmischung unter Mitverwendung eines Katalysators auf 75–80 °C erwärmt werden. Analoges gilt für III.

| Beispiel | Silan A | Isocyanat B | Verhältnis A/B 1 bez. auf reaktive Gruppen | NCO-Gehalt % | Kettenverlängerer % | NCO-Gehalt % | Kettenabbrecher % | NCO-Gehalt % |
|---|---|---|---|---|---|---|---|---|
| 2 | 1 | 2 | 1:2 | 1,22 | Butandiol | 0,61 | – | 0,61 |
| 3 | 1 | 2 | 1:1 | 0 | – | – | – | – |
| 4 | 2 | 3 | 1:1,5 | 0,35 | – | 0,35 | Nonylphenol | 0 |
| 5 | 3 | 4 | 1:1,8 | 0,32 | – | 0,32 | Stearylamin | 0 |
| 6 | 5 | 5 | 1:1,6 | 0,14 | – | 0,14 | Hexanol | 0 |
| 7 | 8 | 1 | 1:1 | 0 | – | – | – | – |
| 8 | 9 | 9 | 1:1 | 0 | – | – | – | – |
| 9 | 10 | 6 | 1:1,9 | 0,48 | Hexamethylendiamin | 0,23 | Dodekanol } 1:1 Stearylamin } | 0 |
| 10 | 13 | 7 | 1:1 | 0 | – | – | – | – |
| 11 | 14 | 8 | 1:2 | 1,30 | Butandiol 0,75; Trimethylolpropan 0,25 | 0 | – | – |
| 12 | 16 | 9 | 1:1,5 | 0,84 | Diäthylenglykol | 0,60 | Dekanol | 0 |
| 13 | 17 | 9 | 1:2 | 1,62 | – | 1,62 | Dodecylalkohol | 0 |

[1] Berechnungsgrundlage ist die analytisch ermittelte Kennzahl der Gruppe X der allgemeinen Formel I, d. h. Aminzahl oder Merkaptanzahl.

D Herstellung einer Dichtungs- bzw. Klebemasse

Beispiel 1

350 g des gemäss Beispiel C 5 hergestellten präpolymeren Silans wurden mit
39 g einer hydrophobierten Kieselsäure (Aerosil® R 974, Warenzeichen der Fa. Degussa, Frankfurt) 15 min unter Vakuum (20 mbar) in einem Planetenkneter gemischt. Danach erfolgte eine Zugabe von
0,4 g Dibutylzinndiacetat
und ein weiteres Mischen von 10 Minuten unter einem Vakuum von 20 mbar.

Zur Überprüfung der Hautbildungszeit und Durchhärtungsgeschwindigkeit wurde eine runde Metallform mit einem Durchmesser von 55 mm und einer Tiefe von 9 mm mit der Masse ausgespritzt und bei Normklima gehärtet.

Die Hautbildungszeit ist der Zeitpunkt, an dem die Oberfläche erstmals von einer durchgehenden Haut überzogen ist.

Die Durchhärtungsgeschwindigkeit wird anhand der Dicke der gebildeten Haut ermittelt.

Es wurde eine Hautbildungszeit von 1½ h und eine Durchhärtungsgeschwindigkeit von 4 mm/Tag festgestellt.

Gemäss Beispiel D 1 wurden die folgenden Dichtungsmassen hergestellt und bei Normalklima (23 °C 50% relative Feuchte) auf Härtungsverhalten überprüft.

| Beispiel | Präpolymeres Silan gem. Beispiel C | Hautbildungszeit | Härtung in mm/Tag |
|---|---|---|---|
| 2 | 1 | 1-2 h | 4 |
| 3 | 3 | 1,5 h | 4,5 |
| 4 | 5 | 1,5 h | 4,5 |
| 5 | 8 | 2 h | 4 |
| 6 | 11 | 1,5 h | 4,5 |
| 7 | 13 | 1 h | 4,5 |
| Vergleichsbeispiel 1 | * | 24 h | innerhalb 2 Tagen nicht messbar |

* = Präpolymeres Silan aus dem Isocyanant Beispiel B 2 und γ-Aminopropyl-trimethoxysilan im Verhältnis der reaktiven Gruppen von 1 : 1.

**Patentansprüche**

1. Verfahren zur Herstellung von unter Feuchtigkeitsausschluss lagerstabilen Kunstharzmassen auf Basis von NCO-Gruppen enthaltenden Präpolymeren und Alkoxysilanen, dadurch gekennzeichnet, dass man NCO-Gruppen enthaltende Polyetherurethane, welche Umsetzungsprodukte sind von Polyetherpolyolen mit überschüssigen Isocyanaten mit Molgewichten im Bereich von ca. 1000-30000 und welche mindestens zwei Isocyanatgruppen pro Molekül enthalten, mit mindestens einer Alkoxysilanverbindung der allgemeinen Formel

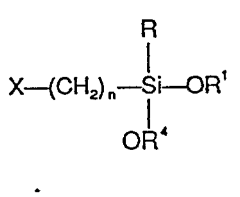

I

mit X = $-SH$, $-NHR^2$
R = $-CH_3$, $-C_2H_5$, $-OR^1$
$R^1 = -(CH_2-CH_2-O)_m R^3$
$R^2$ = H oder $-C_2H_4-NH_2$ oder ein gegebenenfalls substituierter aliphatischer und/oder cycloaliphatischer oder aromatischer Kohlenwasserstoffrest mit 1-10 C-Atomen
$R^3$ = gegebenenfalls substituierter Alkyl- oder Arylrest mit 1-10 C-Atomen
$R^4$ = Alkylrest mit 1-4 C-Atomen oder $R^1$
n = 1-6
m = 1-30

umsetzt, wobei das Verhältnis zwischen deren reaktiven X- und NCO-Gruppen im Bereich von 1 : 2 bis 1 : 1 liegt, und gegebenenfalls übliche Kettenverlängerer, Kettenabbrecher, übliche inerte Zusatzstoffe, Hilfsstoffe und Beschleuniger zusetzt.

2. Verfahren gemäss Anspruch 1, dadurch gekennzeichnet, dass als Silane der allgemeinen Formel I solche verwendet werden, in denen

R = $OR^1$
$R^2$ = H, $-CH_3$, $-C_2H_5$
$R^3$ = Methyl-, Äthyl- oder Phenylrest
$R^4 = R^1$
n = 2 oder 3
m = 1-3

bedeuten.

3. Verfahren gemäss den Ansprüchen 1 oder 2, dadurch gekennzeichnet, dass als Polyetherurethane Reaktionsprodukte aus Polypropylenglykolen mit Molekulargewichten von 500 bis 6000 und einem aliphatischen, cycloaliphatischen, cycloaliphatisch-aliphatischen oder aromatischen Diisocyanat eingesetzt werden.

4. Verfahren gemäss den Ansprüchen 1 bis 3,

dadurch gekennzeichnet, dass als Polyetherurethane Umsetzungsprodukte aus Polyetherpolyolen und Isophorondiisocyanat, Toluylendiisocyanat, Hexamethylendiisocyanat oder Trimethylhexamethylendiisocyanat verwendet werden.

5. Verfahren gemäss den Ansprüchen 1 bis 4, dadurch gekennzeichnet, dass die Polyetherurethane Molekulargewichte von 2000-25000 aufweisen.

6. Verfahren gemäss den Ansprüchen 1 bis 5, dadurch gekennzeichnet, dass die Umsetzungsprodukte aus Polyetherurethanen und Alkoxysilanverbindungen einen NCO-Gehalt von 0-0,7% aufweisen.

7. Verfahren gemäss den Ansprüchen 1 bis 6, dadurch gekennzeichnet, dass als Kettenabbrecher monofunktionelle Alkohole mit 10-18 C-Atomen verwendet werden.

8. Verfahren gemäss den Ansprüchen 1 bis 7, dadurch gekennzeichnet, dass die Umsetzungsprodukte aus Polyetherurethanen und Alkoxysilanverbindungen einen NCO-Gehalt von 0% aufweisen.

9. Verwendung der gemäss den Ansprüchen 1 bis 8 hergestellten Kunstharzmassen als elastische Beschichtungs-, Dichtungs- und Klebemassen.

## Claims

1. Process for the production of synthetic resin compositions, based on prepolymers containing NCO groups and on alkoxysilanes, that with the exclusion of moisture are shelf-stable, characterised in that NCO group-containing polyether urethanes that are reaction products of polyether polyols with excess isocyanate and have molecular weights in the range of approximately from 1000 to 30000 and that contain at least two isocyanate groups per molecule, are reacted with at least one alkoxysilane compound of the general formula

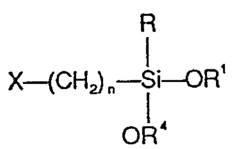

I

wherein
X = -SH, $-NHR^2$,
R = $-CH_3$, $C_2H_5$, $OR^1$,
$R^1$ = $H-(CH_2-CH_2-O)-R^3$
$R^2$ = H or $-C_2H_4-NH_2$ or an optionally substituted aliphatic and/or cycloaliphatic or aromatic hydrocarbon radical having from 1 to 10 carbon atoms,
$R^3$ = an optionally substituted alkyl or aryl radical having from 1 to 10 carbon atoms,
$R^4$ = an alkyl radical having from 1 to 4 carbon atoms or $R^1$,
n = 1 to 6,
m = 1 to 30,
and the ratio between the reactive X and NCO groups is in the range of from 1:2 to 1:1 and, if desired, customary chain lengtheners, chain terminators, conventional inert additives, excipients and accelerators are added.

2. A process according to claim 1, characterised in that there are used as silanes of the general formula I those in which

R = $OR^1$
$R^2$ = H, $-CH_3$, $-C_2H_5$
$R^3$ = a methyl, ethyl or phenyl radical
$R^4$ = $R^1$
n = 2 or 3
m = 1 to 3.

3. A process according to claim 1 or 2 characterised in that there are used as polyether urethanes reaction products of polypropylene glycols having molecular weights of from 500 to 6000 and an aliphatic, cycloaliphatic, cycloaliphatic-aliphatic or aromatic diisocyanate.

4. A process according to claims 1 to 3, characterised in that there are used as polyether urethanes reaction products of polyether polyols and isophorone diisocyanate, toluene diisocyanate, hexamethylene diisocyanate or trimethylhexamethylene diisocyanate.

5. A process according to claims 1 to 4, characterised in that the polyether urethanes have molecular weights of from 2000 to 25000.

6. A process according to claims 1 to 5, characterised in that the reaction products of polyether urethanes and alkoxysilane compounds have an NCO content of from 0 to 0,7%.

7. A process according to claims 1 to 6, characterised in that there are used as chain terminators monofunctional alcohols having from 10 to 18 carbon atoms.

8. A process according to claims 1 to 7, characterised in that the reaction products of polyether urethanes and alkoxysilane compounds have an NCO content of 0%.

9. Use of the synthetic resin compositions produced according to claims 1 to 8 as elastic coating, sealing and adhesive compositions.

## Revendications

1. Procédé de fabrication de matières plastiques qui restent stables au stockage à l'abri de l'humidité, à base de prépolymères à groupes NCO et d'alcoxysilanes, procédé caractérisé en ce que l'on fait réagir des polyéther-uréthanes à groupes NCO, qui sont des produits de réaction de polyéthers-polyols avec des isocyanates en excès, à masses moléculaires de 1000 à 30000 et qui ont au moins deux groupes d'isocyanate par molécule, avec un ou plusieurs alcoxysilanes de formule générale ci-dessous:

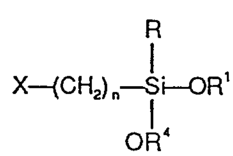

I

dans laquelle X représente -SH ou $-NHR^2$,
R $-CH_3$, $-C_2H_5$ ou $-OR^1$,
$R^1$ $-(CH_2-CH_2-O)-_mR^3$,
$R^2$ étant l'hydrogène, le groupe $-C_2H_4-NH_2$ ou un radical hydrocarboné aliphatique, cycloaliphatique ou aromatique en $C_1$–$C_{10}$, avec éventuellement des substituants, et
$R^3$ un alkyle ou un aryle en $C_1$–$C_{10}$ éventuellement substitué,
$R^4$ représente un alkyle en $C_1$–$C_4$ ou $R^1$,
n est un nombre de 1 à 6, et
m un nombre de 1 à 30,

dans un rapport entre les groupes réactifs X et NCO compris entre 1:2 et 1:1, en ajoutant le cas échéant des allongeurs et des rupteurs de chaînes courants, des additifs inertes, adjuvants et accélérateurs courants.

2. Procédé selon la revendication 1, caractérisé en ce que l'on prend, comme silanes de formule définie à la revendication 1, des silanes dans lesquels:

R est un groupe $OR^1$,
$R^2$ est H, $-CH_3$ ou $-C_2H_5$,
$R^3$ est le radical méthyle, éthyle ou phényle,
$R^4$ est un groupe $R^1$,
n est le nombre 2 ou 3 et
m un nombre de 1 à 3.

3. Procédé selon la revendication 1 ou 2, caractérisé en ce que l'on utilise comme polyéthers-uréthanes des produits de réaction de polypropylène-glycols à masses moléculaires de 500 à 6000 et d'un isocyanate aliphatique, cycloaliphatique, cycloaliphatique-aliphatique ou aromatique.

4. Procédé selon l'une quelconque des revendications 1 à 3, caractérisé en ce que l'on utilise comme polyéthers-uréthanes des produits de réaction de polyétherspolyols avec le diisocyanate d'isophorone, de toluylène, d'hexaméthylène ou de triméthylhexaméthylène.

5. Procédé selon l'une quelconque des revendications 1 à 4, caractérisé en ce que les polyéthers-uréthanes ont des masses moléculaires de 2000 à 25000.

6. Procédé selon l'une quelconque des revendications 1 à 5, caractérisé en ce que les produits de réaction de polyéthers-uréthanes et d'alcoxysilanes ont une teneur en groupes NCO de 0 à 0,7%.

7. Procédé selon l'une quelconque des revendications 1 à 6, caractérisé en ce que l'on utilise comme rupteurs de chaînes des monoalcools ayant de 10 à 18 atomes de carbone.

8. Procédé selon l'une quelconque des revendications 1 à 7, caractérisé en ce que les produits de réaction de polyéthers-uréthanes et d'alcoxysilanes n'ont pas de groupes NCO.

9. Utilisation des matières plastiques qui ont été obtenues selon les revendications 1 à 8 comme matières élastiques de revêtement, d'étanchéification et adhésives.